(19) Europäisches Patentamt
European Patent Office
Office européen des brevets

(11) Veröffentlichungsnummer: **0 218 951 B1**

# (12) EUROPÄISCHE PATENTSCHRIFT

(45) Veröffentlichungstag der Patentschrift: **08.11.89**

(51) Int. Cl.⁴: **C 01 B 3/22**

(21) Anmeldenummer: **86112993.0**

(22) Anmeldetag: **20.09.86**

(54) **Verfahren zum Erzeugen eines Kohlenoxide und Wasserstoff enthaltenden Produktgases aus Methanol.**

(30) Priorität: **18.10.85 DE 3537152**

(43) Veröffentlichungstag der Anmeldung: **22.04.87 Patentblatt 87/17**

(45) Bekanntmachung des Hinweises auf die Patenterteilung: **08.11.89 Patentblatt 89/45**

(84) Benannte Vertragsstaaten: **BE DE FR GB IT NL SE**

(56) Entgegenhaltungen: **EP-A- 0 018 700**

(73) Patentinhaber: **METALLGESELLSCHAFT AG, Reuterweg 14 Postfach 3724, D-6000 Frankfurt/M.1 (DE)**

(72) Erfinder: **Möller, Friedrich-Wilhelm, Dr., Breslauer Ring 15, D-6382 Friedrichsdorf (DE)**
Erfinder: **Boll, Walter, Dr., Leuchte 96, D-6000 Frankfurt am Main 60 (DE)**
Erfinder: **Marschner, Friedemann, Ruppertshainer Strasse 27, D-6370 Oberursel 6 (DE)**
Erfinder: **Müller, Wolf-Dieter, Friedrichsdorfer Strasse 15, D-6380 Bad Homburg (DE)**

(74) Vertreter: **Rieger, Harald, Dr., Reuterweg 14, D-6000 Frankfurt am Main (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



ACTORUM AG

**Beschreibung**

Die Erfindung betrifft ein Verfahren zum Erzeugen eines Kohlenoxide und Wasserstoff enthaltenden Produktgases durch Spalten von dampfförmigem Methanol an einem indirekt beheizten, zinkhaltigen Katalysator bei einem Druck von 10 bis 50 bar im Temperaturbereich von 250 bis 600°C.

Ein solches Verfahren ist aus dem Europa-Patent 18 700 und dem dazu korrespondierenden US-Patent 4 316 880 bekannt. Der Erfindung liegt die Aufgabe zugrunde, ein gegenüber dem bekannten Verfahren weit flexibleres Verfahren zu finden, bei dem das Volumenverhältnis von Kohlenmonoxid zu Wasserstoff im Produktgas in einem weiten Bereich variieren kann. Erfindungsgemäß gelingt dies dadurch, daß man das dampfförmige Methanol mit einem Gasgemisch vermischt, das vorwiegend aus Kohlendioxid und Wasserstoff besteht und ein methanolreiches Einsatzgemisch erzeugt, das Einsatzgemisch mit einer Eintrittstemperatur von 300 bis 400°C einer ersten katalytischen Spaltzone aufgibt, aus der ersten Spaltzone ein Zwischenprodukt mit einer Temperatur im Bereich von 350 bis 600°C und einem Methanolgehalt von höchstens 1 Vol.% abzieht, das Zwischenprodukt kühlt und Wasser als Kondensat mindestens teilweise entfernt, das Zwischenprodukt auf Temperaturen im Bereich von 320 bis 420°C erhitzt, mindestens 50 Vol.% des Zwischenprodukts in eine zweite katalytische Spaltzone leitet und ein Vorprodukt aus der zweiten Spaltzone mit Temperaturen von 350 bis 600°C abzieht, kühlt, ein wasserhaltiges Kondensat abtrennt, das Vorprodukt mit einer Eintrittstemperatur von 20 bis 80°C durch eine Trennzone leitet, die zahlreiche, selektiv durchlässige Membranen aufweist, aus der Trennzone einen ersten und zweiten Gasstrom abzieht, wobei der erste Gasstrom zu mindestens 90 Vol.% aus $CO_2$ und $H_2$ und der zweite Gasstrom zu mindestens 30 Vol.% aus CO besteht, den ersten Gasstrom mit $CO_2$ anreichert und als Gasgemisch mit dem dampfförmigen Methanol vermischt. Das Gasgemisch, welches man vor der ersten Spaltzone mit dem dampfförmigen Methanol vermischt, besteht vorzugsweise zu mindestens 90 Vol.% aus $CO_2$ und $H_2$, wobei ein Teil des $CO_2$ aus einer fremden Quelle stammt. Der erste Gasstrom aus der Trennzone wird auch als Permeat bezeichnet, der zweite Gasstrom ist das Produkt. Die Zusammensetzung der beiden Gasströme variiert sehr stark, je nach Vorgabe hinsichtlich des gewünschten $H_2$/CO-Verhältnisses im Produkt und der Prozeßparameter (Druck, Temperatur, Wirkungsgrad) an den Membranen. Aus dem Produkt wird üblicherweise noch überschüssiges Kohlendioxid entfernt, bevor das Produkt direkt in einer Synthese oder zur Reindarstellung der Komponenten CO und $H_2$ weiterverarbeitet wird.

Das Einsatzgemisch enthält beim erfindungsgemäßen Verfahren nicht nur erhebliche Mengen an $CO_2$, sondern auch an Wasserstoff, der vor allem in der ersten Spaltzone reduzierend wirksam wird und dabei insbesondere $CO_2$ zu CO reduziert. Die wichtigsten, in den katalytischen Spaltzonen ablaufenden Reaktionen sind folgende:

$$CH_3OH \rightleftarrows CO + 2H_2 \quad (1)$$
$$CH_3OH + H_2O \rightleftarrows CO_2 + 3H_2 \quad (2)$$
$$CO_2 + H_2 \rightleftarrows CO + H_2O \quad (3)$$
$$CH_3OH + 2CO_2 \rightleftarrows 3CO + 2H_2O \quad (4)$$

Die Gleichung (3) zeigt, daß man die CO-Menge im Produktgas sowohl durch Anreichern von $CO_2$ als auch von Wasserstoff im Einsatzgemisch anheben kann. Die Reaktionsgleichungen zeigen außerdem, daß ein niedriger Wassergehalt in dem durch die katalytische Spaltzone geleiteten Gemisch ebenfalls vorteilhaft ist und die CO-Produktion erhöht. Thermodynamisch bedingen höhere Temperaturen am Katalysator ebenfalls eine Erhöhung der CO-Produktion.

Die in den beiden Spaltzonen zu verwendenden Katalysatoren sind an sich bekannt, sie enthalten neben Zinkoxid zumeist Chromoxid. Übliche Katalysatoren bestehen zu 50 bis 90 Gew.% aus ZnO und $CrO_3$.

Das der ersten Spaltzone aufgegebene methanolreiche Einsatzgemisch besteht zweckmäßigerweise zu 15 bis 65 Vol.% aus Wasserstoff, ferner kann dieses Einsatzgemisch 10 bis 75 Vol.% $CO_2$ enthalten. Bevorzugt liegt der Wasserdampfgehalt in dem in die zweite katalytische Spaltzone geleiteten Zwischenprodukt bei höchstens 2 Vol.% und vorzugsweise höchstens 1 Vol.%.

Ein besonders hoher Umsatz zu Kohlenmonoxid wird erziehlt, wenn man 40 bis 70% des von Wasserdampf weitgehend befreiten Zwischenprodukts aus der ersten Spaltzone in die erste Spaltzone zurückführt. Durch diesen Kreislauf wird es möglich, anteilmäßig mehr Wasserdampf zu kondensieren und das Gleichgewicht für die Gleichungen (3) und (4) im Sinne höherer CO-Anteile zu verschieben. Ein gleich hoher CO-Umsatz bei gleichem Einsatzgemisch ist ohne Zwischenprodukt-Kreislauf nur durch Hintereinanderschaltung mehrerer Spaltzonen mit zwischengeschalteten Kondensations- und Wiederanwärmstufen zu erzielen. Will man auf die Kreislaufführung von Zwischenproduktgas verzichten und dennoch eine nur zweistufige Prozeßführung wählen, so muß der Anteil an zugeführtem oder rückgeführtem Kohlendioxid im Gasgemisch wesentlich erhöht werden, was jedoch üblicherweise mit höheren Kosten verbunden ist. Die Verfahrensvariante mit im Kreislauf geführtem Zwischenproduktgas wird deshalb allgemein als die wirtschaftlichere anzusehen sein, was auch die nachfolgenden Beispiele zeigen.

Ausgestaltungen des Verfahrens werden mit Hilfe der Zeichnung erläutert.

Das zu spaltende Methanol wird flüssig in der Leitung 1 herangeführt, sein Wassergehalt beträgt vorzugsweise höchstens 10 Gew.%. Im Erhitzer 2 wird das Methanol verdampft und strömt in der Leitung 3 ab. Dem dampfförmigen Methanol gibt man aus der Leitung 4 ein Gasgemisch zu, das zu mindestens 90 Vol.% aus $CO_2$ und $H_2$ besteht. Ferner kann aus der Leitung 5 über das geöffnete Ventil 6 rückgeführtes Zwischenprodukt beigegeben werden. In der Leitung 4a am Eintritt des ersten Spaltreaktors 7 weist das Einsatzgemisch eine Temperatur von 300 bis 400°C, einen Wasserstoffanteil von 15 bis 65 Vol.% und einen $CO_2$-Gehalt von 10 bis 75 Vol.%

auf. Im Reaktor 7 ist körniger, zinkreicher Katalysator in Röhren angeordnet, die zum Beheizen von einer heißen Salzschmelze umgeben sind. Für die Salzschmelze besteht ein Umlauf über die Leitung 8, den gefeuerten Erhitzer 9 und die zum Reaktor 7 zurückführende Leitung 10. In der Leitung 11 verläßt den Reaktor 7 ein Zwischenprodukt, das einen Methanolgehalt von höchstens 1 Vol.% und eine Temperatur im Bereich von 350 bis 450°C aufweist. Das dampfhaltige Zwischenprodukt wird zunächst im Wärmeaustauscher 12 vorgekühlt und gelangt dann in der Leitung 13 zu einem weiteren Kühler 14, in welchem der Wasserdampf-Taupunkt unterschritten wird. Im nachfolgenden Abscheider 15 wird das gebildete Kondensat, das vor allem aus Wasser besteht und daneben auch etwas Methanol enthalten kann, abgetrennt, und fließt in der Leitung 16 ab.

Das gekühlte, weitgehend wasserfreie Zwischenprodukt wird in der Leitung 18 zur Temperaturerhöhung durch den Wärmeaustauscher 12 geführt, den es in der Leitung 19 verläßt.

Für den Fall der Rückführung von weitgehend wasserfreiem, gasförmigem Zwischenprodukt zum ersten Spaltreaktor 7 ist das Ventil 50 geschlossen und das Gas wird nach dem Abscheider 15 über die Leitung 47 dem Kompressor 48 zum Verdichten zugeführt. Es gelangt anschließend zum Wärmeaustauscher 12 und verläßt diesen vorgewärmt in der Leitung 19.

Das vorgewärmte Zwischenprodukt wird zu mindestens 30% durch die Leitung 20, das geöffnete Ventil 21 und die Leitung 22 zum zweiten Spaltreaktor 23 geführt. Falls erwünscht, kann das restliche Zwischenprodukt aus Leitung 19 durch die Leitung 5 und über das geöffnete Ventil 6 zum Reaktor 7 zurückgeführt werden.

Das Zwischenprodukt in der Leitung 22 weist eine Temperatur im Bereich von 280 bis 450°C auf, sein Wassergehalt liegt bei höchstens 2 Vol.% und vorzugsweise bei höchstens 1 Vol.%. Der Methanolgehalt im Zwischenprodukt der Leitung 22 liegt unter 1 Gew.%. Im Spaltreaktor 23 erfolgt üblicherweise wie im Reaktor 7 und bei den bereits dort angegebenen Bedingungen die Umsetzung des eingeleiteten Zwischenprodukts an einem in Röhren angeordneten Zink-Katalysator. Der Reaktor 23 besitzt ebenfalls eine Beheizung der Katalysatorröhren durch eine heiße Salzschmelze, zu der ein Umlauf durch die Leitung 25, den gefeuerten Erhitzer 26 und die Rückleitung 27 gehört.

Das den zweiten Spaltreaktor 23 in der Leitung 29 verlassende Vorprodukt weist Temperaturen im Bereich von 350 bis 600°C und vorzugsweise von 370 bis 450°C auf und enthält eine gegenüber dem Gas der Leitung 22 erhöhte CO-Menge. Es wird zunächst im Wärmeaustauscher 30 indirekt gekühlt. In der Leitung 31 wird das Vorprodukt einem weiteren Kühler 32 zugeführt, in welchem der Wasserdampftaupunkt unterschritten wird, so daß im anschließenden Abscheider 33 ein im wesentlichen aus Wasser bestehendes Kondensat abgetrennt und durch die Leitung 34 abgezogen werden kann. Das Vorprodukt in der Leitung 36 weist Temperaturen im Bereich von 40 bis 80°C auf, es besteht zu mindestens 40 Vol.% aus CO und $H_2$ und enthält daneben noch $CO_2$ sowie höchstens etwa 5 Vol.% $H_2O$. Dieses Vorprodukt wird durch eine Trennzone 40 geleitet, die zahlreiche, selektiv durchlässige Membranen aufweist. Die Trennung von Gasgemischen mit Hilfe selektiv durchlässiger Membranen ist bekannt und z.B. in Hydrocarbon Processing, Febr. 1985, Seiten 87 bis 89 sowie Environmental Progress, Band 3, Nr. 3, August 1984, Seiten 212 bis 214 beschrieben. Für das bekannte Trennverfahren verwendet man insbesondere Membranen aus Celluloseacetat.

Aus der Trennzone 40 werden zwei Gasströme mit unterschiedlicher Zusammensetzung abgezogen, der erste, auch als Permeat bezeichnete Gasstrom gelangt in der Leitung 42a über den Verdichter 41 durch die Leitung 42 zum Wärmeaustauscher 30 und wird dort erhitzt. Dieser erste Gasstrom besteht zu mindestens 30 Vol.% und vorzugsweise zu über 60 Vol.% aus $H_2$ und zu mindestens 7 Vol.% und vorzugsweise mindestens 20 Vol.% aus Kohlendioxid. Der zweite Gasstrom, das rohe Produkt, verläßt die Trennzone 40 durch die Leitung 44, er besteht zu mindestens 30 Vol.% und vorzugsweise über 45 Vol.% aus CO, zu 7 bis 55 Vol.% aus $H_2$ und zu höchstens 55 und vorzugsweise unter 25 Vol.% aus $CO_2$. In der anschließenden $CO_2$-Entfernung 45 trennt man aus dem rohen Produkt mit einem an sich bekannten Verfahren das $CO_2$ weitgehend ab; die $CO_2$-Entfernung kann z.B. durch ein chemisches Waschverfahren oder durch Adsorption in Methanol bei tiefen Temperaturen erfolgen. In der Leitung 46 steht ein Produkt zur Verfügung, das praktisch nur noch aus CO und $H_2$ besteht und zu verschiedenen Zwecken wie z.B. als Synthesegas verwendet werden kann. Das in der $CO_2$-Entfernung 45 abgetrennte $CO_2$ wird in der Leitung 50 abgeführt und mit dem erhitzten ersten Gasstrom aus der Leitung 51 gemischt. $CO_2$ aus einer Fremdquelle wird in der Leitung 52 herangeführt. Dieses Fremd-$CO_2$ ist insbesondere für die Erzeugung von Produktgasen mit $H_2$-CO-Volumen-Verhältnissen unter 2,0 stets nötig. Das Gasgemisch, das vor allem Kohlendioxid und Wasserstoff enthält, gelangt in der Leitung 4 in der bereits beschriebenen Weise in den ersten Spaltreaktor 7.

*Beispiele:*

In einer der Zeichnung entsprechenden Verfahrensführung werden jeweils 1000 kg praktisch wasserfreies Methanol in der Leitung 1 herangeführt und im Erhitzer 2 verdampft. In den Spaltreaktoren 7 und 23 wird jeweils der gleiche Katalysator verwendet, der zu 75 Gew.% aus ZnO und zu 25 Gew.% aus $CrO_3$ besteht. In den nachfolgenden Tabellen sind Daten, die teilweise berechnet sind, zu verschiedenen Apparaturen und Leitungen angegeben. Die Wasserstoffausbeute der Trennzone 40 ist definiert durch den $H_2$-Anteil im Gas der Leitung 42a zu dem der Leitung 36.

Beispiel 1 betrifft eine Verfahrensführung, bei der die Rückführleitung 5 durch Schließen des Ventils 6 außer Funktion ist. Bei Beispiel 2 ist das Ventil 6 hingegen geöffnet und ein Teil des Zwischenprodukts der Leitung 19 gelangt zum Reaktor 7 durch die Leitung 5, der Rest des Zwischenprodukts wird im Reaktor 23 weiterverarbeitet.

| | Beispiel 1 | Beispiel 2 |
|---|---|---|
| Leitung 3: Methanoleinsatzmenge ($Nm^3$) | 700 | 700 |
| Eintritt Reaktor 7: Menge des Einsatzgemisches ($Nm^3$) | 4.740 | 10.335 |
| Leitung 11: Gasmenge, wasserfrei ($Nm^3$) | 5.750 | 10.980 |
| Leitung 16: Kondensatmenge (kg) | 202 | 319 |
| Leitung 22: Gasmenge mit Wasserdampf ($Nm^3$) | 5.805 | 6.040 |
| Leitung 34: Kondensatmenge (kg) | 128 | 101 |
| Leitung 36: Gasmenge ($Nm^3$) | 5.650 | 5.920 |
| Trennzone 40: Wasserstoffausbeute | 0,75 | 0,85 |
| Leitung 42: Druck (bar) | 2,5 | 5,0 |
| Leitung 44: Gasmenge ($Nm^3$) | 2.450 | 2.030 |
| $H_2$/CO-Volumenverhältnis | 0,80 | 0,50 |

| | Beispiel 1 | Beispiel 2 |
|---|---|---|
| $CO_2$ aus Leitung 50 ($Nm^3$) | 425 | 175 |
| $CO_2$ aus Leitung 52 ($Nm^3$) | 415 | 520 |
| Austriebsleistungen (kw) | | |
| für Verdichter 41: | 370 | 305 |
| für Verdichter 48: | — | 65 |

Die beiden Beispiele basieren aus folgenden Werten für Druck und Temperatur:

| | Beispiel 1 | | Beispiel 2 | |
|---|---|---|---|---|
| | Temperatur | Druck | Temperatur | Druck |
| Eintritt Reaktor 7 | 350 | 25 | 380 | 25 |
| Leitung 11 | 400 | 24 | 450 | 24 |
| Leitung 16 | 50 | 23 | 50 | 23 |
| Leitung 22 | 340 | 22 | 360 | 25 |
| Leitung 29 | 400 | 21 | 450 | 24 |
| Leitung 34 | 50 | 20 | 50 | 23 |

Es folgen die Gaszusammensetzungen für die Beispiele 1 und 2. An den mit (o) gekennzeichneten Stellen liegt der Wasserdampfgehalt unter 1 Vol.% und ist deshalb unerheblich, so daß er in der Analyse nicht berücksichtigt wurde.

Gaszusammensetzungen (in Vol.%) für Beispiel 1:

| | $CH_3OH$ | $CO_2$ | CO | $H_2$ | $CH_4$ | $H_2O$ |
|---|---|---|---|---|---|---|
| Eintritt Reaktor 7 | 14,79 | 25,76 | 2,03 | 56,53 | 0,02 | 0,87 |
| Leitung 11 | — | 15,90 | 17,39 | 61,51 | 0,10 | 5,10 |
| Leitung 29 | — | 13,87 | 20,86 | 61,46 | 0,10 | 3,71 |
| Leitung 42 | — | 11,88 | 3,02 | 83,80 | 0,01 | 1,29 |
| Leitung 44 | — | 17,46 | 45,73 | 36,58 | 0,23 | (o) |

Gaszusammensetzungen (in Vol.%) für Beispiel 2:

| | $CH_3OH$ | $CO_2$ | CO | $H_2$ | $CH_4$ | $H_2O$ |
|---|---|---|---|---|---|---|
| Eintritt Reaktor 7 | 6,77 | 13,24 | 11,42 | 67,54 | 0,07 | 0,96 |
| Leitung 11 | — | 8,49 | 19,83 | 67,17 | 0,10 | 4,41 |
| Leitung 29 | — | 6,72 | 22,61 | 67,51 | 0,10 | 3,05 |
| Leitung 42 | — | 5,91 | 3,67 | 89,15 | 0,01 | 1,26 |
| Leitung 44 | — | 8,73 | 60,65 | 30,33 | 0,28 | (o) |

Die vorstehenden Beispiele sind typisch, ohne die Möglichkeiten des erfindungsgemäßen Verfahrens voll auszuschöpfen. So werden durch Variationen der Membranfläche in der Trennzone 40 und die Wahl des Gegendrucks in der Leitung 42a die internen Stoffströme nachhaltig verändert, wie auch die Anforderungen an die Trennzone 40 ihrerseits durch die Wahl des in Leitung 5 zurückzuführenden Anteils der Zwischenproduktmenge beeinflußt werden können.

Beispiel 2 hat gegenüber Beispiel 1 keinen höheren Kompressionsaufwand, obwohl wesentlich mehr CO im Produkt (Leitung 44) enthalten ist. Im Beispiel 2 ist der Energieaufwand für die Rückgewinnung von $CO_2$ in Leitung 50 aus dem Rohprodukt in der $CO_2$-

Entfernung 45 reduziert aufgrund des in dem ersten Reaktor 7 erhöhten Umsatzes wegen der Rückführung von Zwischenprodukt durch die Leitung 5.

Die hohe Flexibilität des erfindungsgemäßen Verfahrens erlaubt eine Minimierung der Herstellkosten des gewünschten Produkts in Leitung 46.

**Patentansprüche**

1. Verfahren zum Erzeugen eines Kohlenoxide und Wasserstoff enthaltenden Produktgases durch Spalten von dampfförmigem Methanol an einem indirekt beheizten, zinkhaltigen Katalysator bei einem Druck von 10 bis 50 bar im Temperaturbereich von 250 bis 600°C, dadurch gekennzeichnet, daß man das dampfförmige Methanol mit einem Gasgemisch vermischt, das vorwiegend aus Kohlendioxid und Wasserstoff besteht und ein methanolreiches Einsatzgemisch erzeugt, das Einsatzgemisch mit einer Eintrittstemperatur von 300 bis 400°C einer ersten katalytischen Spaltzone aufgibt, aus der ersten Spaltzone ein Zwischenprodukt mit einer Temperatur im Bereich von 350 bis 600°C und einem Methanolgehalt von höchstens 1 Vol.% abzieht, das Zwischenprodukt kühlt und Wasser als Kondensat mindestens teilweise entfernt, das Zwischenprodukt auf Temperaturen im Bereich von 320 bis 420°C erhitzt, mindestens 50% des Zwischenprodukts in eine zweite katalytische Spaltzone leitet und ein Vorprodukt aus der zweiten Spaltzone mit Temperaturen von 350 bis 600°C abzieht, kühlt, ein wasserhaltiges Kondensat abtrennt, das Vorprodukt mit einer Eintrittstemperatur von 20 bis 80°C durch eine Trennzone leitet, die zahlreiche, selektiv durchlässige Membranen aufweist, aus der Trennzone einen ersten und zweiten Gasstrom abzieht, wobei der erste Gasstrom zu mindestens 90 Vol.% aus $CO_2$ und $H_2$ und der zweite Gasstrom zu mindestens 35 Vol.% aus CO besteht, den ersten Gasstrom mit $CO_2$ anreichert und als Gasgemisch mit dem dampfförmigen Methanol vermischt.

2. Verfahren nach Anspruch 1, dadurch gekennzeichnet, daß das methanolreiche Einsatzgemisch zu 15 bis 75 Vol.% aus Wasserstoff besteht.

3. Verfahren nach Anspruch 1 oder 2, dadurch gekennzeichnet, daß das methanolreiche Einsatzgemisch zu 10 bis 75 Vol.% aus $CO_2$ besteht.

4. Verfahren nach Anspruch 1 oder einem der folgenden, dadurch gekennzeichnet, daß das in die zweite katalytische Spaltzone geleitete Zwischenprodukt einen Wasserdampfgehalt von höchstens 2 Vol.% aufweist.

5. Verfahren nach Anspruch 1 oder einem der folgenden, dadurch gekennzeichnet, daß man einen Teilstrom von 40 bis 70% des von Kondensat befreiten, auf Temperaturen von 320 bis 420°C erhitzten Zwischenprodukts mit dem dampfförmigen Methanol mischt und in die erste Spaltzone zurückführt.

6. Verfahren nach Anspruch 1 oder einem der folgenden, dadurch gekennzeichnet, daß man aus dem zweiten Gasstrom $CO_2$ mindestens teilweise entfernt.

7. Verfahren nach Anspruch 6, dadurch gekennzeichnet, daß das aus dem zweiten Gasstrom entfernte $CO_2$ dem ersten Gasstrom zugefügt wird.

**Claims**

1. A process for producing a product gas containing carbon oxides and hydrogen by the splitting of vaporous methanol on an indirectly heated, zinc-containing catalyst at a pressure of 10 to 50 bar at temperatures in the range of 250 to 600°C, characterised in that the vaporous methanol is mixed with a gas mixture which consists predominantly of carbon dioxide and hydrogen and a methanol-rich feed mixture is produced, the feed mixture is supplied to a first catalytic splitting zone at an entry temperature of 300 to 400°C, an intermediate product at a temperature in the range of 350 to 600°C and a methanol content of at most 1% vol. is withdrawn from the first splitting zone, the intermediate product is cooled and water is at least partly removed as a condensate, the intermediate product is heated to temperatures in the range of 320 to 420°C, at least 50% of the intermediate product is supplied to a second catalytic splitting zone and an initial product is withdrawn from the second splitting zone at temperatures of 350 to 600°C and is cooled, an aqueous condensate is separated off, the initial product is passed at an entry temperature of 20 to 80°C through a separating zone which has numerous selectively permeable membranes, a first and second gas stream are withdrawn from the separating zone, the first gas stream containing at least 90% vol. $CO_2$ and $H_2$ and the second gas stream containing at least 35% vol. CO, the first gas stream is enriched with $CO_2$ and is mixed as the gas mixture with the vaporous methanol.

2. A process according to Claim 1, characterised in that the methanol-rich feed mixture consists of 15 to 75% vol. hydrogen.

3. A process according to Claim 1 or 2, characterised in that the methanol-rich feed mixture consistis of 10 to 75% vol.$CO_2$.

4. A process according to Claim 1 or one of the following Claims, characterised in that the intermediate product supplied to the second catalytic splitting zone has a water vapour content of at most 2% vol.

5. A process according to Claim 1 or one of the following Claims, characterised in that a partial stream of 40 to 70% of the intermediate product which has been freed of condensate and heated to temperatures of 320 to 420°C is mixed with the vaporous methanol and recycled to the first splitting zone.

6. A process according to Claim 1 or one of the following Claims, characterised in that $CO_2$ is at least partly removed from the second gas stream.

7. A process according to Claim 6, characterised in that the $CO_2$ which is removed from the second gas stream is added to the first gas stream.

**Revendications**

1. Procédé de production d'un produit gazeux, contenant des oxydes de carbone et de l'hydrogène,

par dissociation de méthanol sous forme de vapeur, sous une pression de 10 à 50 bar, dans une plage à température de 250 à 600°C, sur un catalyseur contenant du zinc et chauffé indirectement, caractérisé en ce qu'il consiste à mélanger le méthanol sous forme de vapeur à un mélange gazeux constitué principalement de dioxyde de carbone et d'hydrogène et à produire un mélange de charge riche en méthanol, à charger le mélange de charge avec une température d'entrée de 300 à 400°C dans une première zone de dissociation catalytique, à soutirer de la première zone de dissociation un produit intermédiaire ayant une température comprise entre 350 et 600°C et une teneur en méthanol de 1% en volume au plus, à refroidir le produit intermédiaire et à éliminer au moins partiellement l'eau sous forme de produit condensé, à porter le produit intermédiaire à des températures comprises entre 320 et 420°C, à envoyer au moins 50% du produit intermédiaire dans une seconde zone de dissociation catalytique, et à soutirer de la seconde zone de dissociation un précurseur à des températures de 350 à 600°C, à le refroidir et à séparer un produit condensé contenant de l'eau, à envoyer le précurseur à une température d'entrée de 20 à 80°C dans une zone de séparation qui comporte de nombreuses membranes perméables sélectivement, à soutirer de la zone de séparation un premier courant gazeux et un second courant gazeux, le premier courant gazeux étant constitué pour au moins 90% en volume de $CO_2$ et d'$H_2$ et le second courant gazeux pour au moins 35% en volume de CO, à enrichir le premier courant gazeux en $CO_2$ et à le mélanger, à titre de mélange gazeux, au méthanol sous forme de vapeur.

2. Procédé suivant la revendication 1, caractérisé en ce que le mélange de charge riche en méthanol est constitué d'hydrogène pour 15 à 75% en volume.

3. Procédé suivant la revendication 1 ou 2, caractérisé en ce que le mélange de charge riche en méthanol est consisté de $CO_2$ pour 10 à 75% en volume.

4. Procédé suivant la revendication 1 ou l'une des suivantes, caractérisé en ce que le produit intermédiaire envoyé dans la seconde zone de dissociation catalytique a une teneur en vapeur d'eau de 2% en volume au plus.

5. Procédé suivant la revendication 1 ou l'une des suivantes, caractérisé en ce qu'il consiste à mélanger au méthanol, sous forme de vapeur, un courant partiel de 40 à 70% du produit intermédiaire débarrassé du produit condensé et porté à des températures de 320 à 420°C, et à le retourner à la première zone de dissociation.

6. Procédé suivant la revendication 1 ou l'une des suivantes, caractérisé en ce qu'il consiste à éliminer au moins partiellement le $CO_2$ du second courant gazeux.

7. Procédé suivant la revendication 6, caractérisé en ce qu'il consiste à envoyer le $CO_2$ éliminé du second courant gazeux au premier courant gazeux.

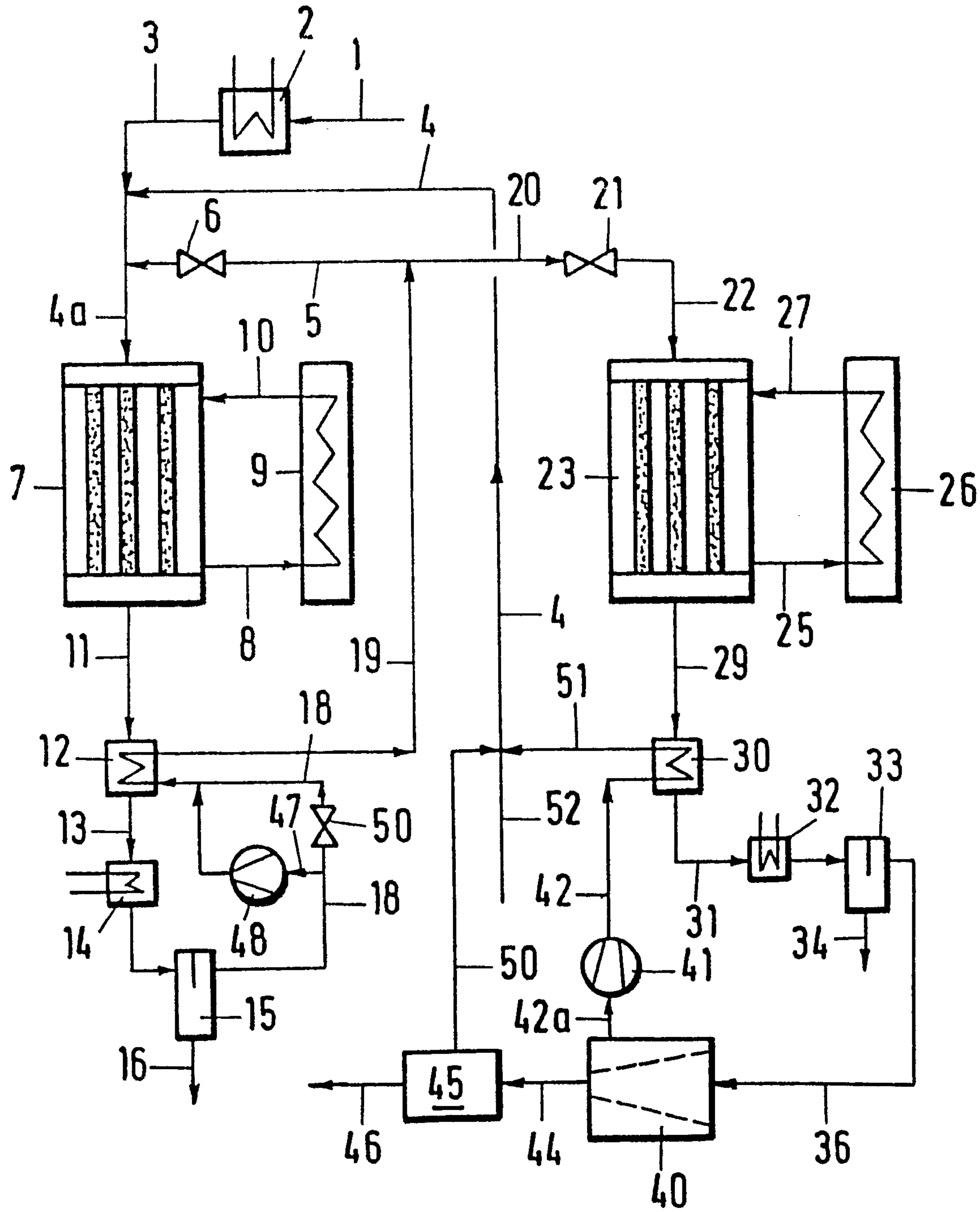
1
2
3
4
4a
5
6
7
8
9
10
11
12
13
14
15
16
18
19
20
21
22
23
25
26
27
29
30
31
32
33
34
36
40
41
42
42a
44
45
46
47
48
50
51
52